# EUROPÄISCHE PATENTSCHRIFT

(11) **EP 2 935 860 B1**
(45) Veröffentlichungstag und Bekanntmachung des Hinweises auf die Patenterteilung: **18.10.2017**
(21) Anmeldenummer: 13808000.7
(22) Anmeldetag: 17.12.2013
(51) Int. Cl.: F02M 59/44, F02M 59/02

(54) **KOLBEN-KRAFTSTOFFPUMPE FÜR EINE BRENNKRAFTMASCHINE**
PISTON FUEL PUMP FOR AN INTERNAL COMBUSTION ENGINE
POMPE À CARBURANT À PISTON POUR MOTEUR À COMBUSTION INTERNE

(30) Priorität: 20.12.2012 DE 102012224029; 16.12.2013 DE 102013226062
(43) Veröffentlichungstag der Anmeldung: 28.10.2015
(73) Patentinhaber: Robert Bosch GmbH, 70442 Stuttgart (DE)
(72) Erfinder: STRITZEL, Soeren, 71032 Boeblingen (DE); SEBASTIAN, Thomas, 71729 Erdmannhausen (DE); JAHN, Heiko, 71732 Tamm (DE); LAUB, Achim, 71686 Remseck am Neckar (DE); ROPERTZ, Peter, 71739 Oberriexingen (DE)
(86) Internationale Anmeldenummer: PCT/EP2013/076799
(87) Internationale Veröffentlichungsnummer: WO 2014/095781

(56) Entgegenhaltungen:
- EP-A2- 0 156 136
- EP-A2- 1 312 791
- WO-A1-94/29577
- DE-A1- 10 322 598
- DE-A1-102008 002 169
- GB-A- 608 951
- JP-A- 2005 337 061

## Beschreibung

### Stand der Technik

Die Erfindung betrifft eine Kolben-Kraftstoffpumpe nach dem Oberbegriff des Anspruchs 1.

Vom Markt bekannt sind Kraftstoffsysteme von Brennkraftmaschinen, bei denen der Kraftstoff aus einem Kraftstofftank mittels einer mechanisch angetriebenen Kolben-Kraftstoffpumpe unter hohem Druck in ein Kraftstoffrail gefördert wird. Hierzu ist in der Kolben-Kraftstoffpumpe ein verschiebbar gelagerter Pumpenkolben vorgesehen, der Kraftstoff in einem Förderraum der Kolben-Kraftstoffpumpe verdichtet. Der Pumpenkolben ist in einer Kolbenbuchse durch eine enge Passung gleitend und mit einem geringen Dichtspalt geführt. Die Kolbenbuchse muss zum Abstützen und Abdichten über eine Spaltdichtung eine gewisse Länge aufweisen und gegebenenfalls große Querkräfte aufnehmen. Daher wird die Kolbenbuchse oft aus Stahl hergestellt. Aufgrund hoher Toleranzanforderungen wird darüber hinaus eine sogenannte "Kolbenpaarung" verwendet, d.h. jedem Pumpengehäuse wird ein bestimmter Kolben zugeordnet. Ferner muss der Zylinder im Pumpengehäuse aufwendig gehont werden.

DE 10 2008 002169 A1 offenbart eine Hochdruckpumpe.

EP 0156 136 A2 offenbart eine Hochdruckdichtung für einen Kolben, insbesondere einen Plungerkolben.

DE 103 22 598 A1 und JP 2005-337061 A offenbaren jeweils eine HochdruckKolben-Pumpe für eine Brennkraftmaschine.

### Offenbarung der Erfindung

Das der vorliegenden Erfindung zu Grunde liegende Problem wird durch eine Kolben-Kraftstoffpumpe mit den Merkmalen des Anspruchs 1 gelöst. Vorteilhafte Weiterbildungen der Erfindung sind in Unteransprüchen genannt. Weitere für die Erfindung wichtige Merkmale finden sich darüber hinaus in der nachfolgenden Beschreibung und in der Zeichnung.

Die Erfindung betrifft eine Kolben-Kraftstoffpumpe mit einem Pumpenkolben, welcher einen einem Antrieb zugewandten Endabschnitt aufweist. Erfindungsgemäß ist der Pumpenkolben mittels mindestens eines ersten und mindestens eines zweiten Führungsabschnitts radial geführt, wobei der erste und der zweite Führungsabschnitt axial voneinander beabstandet sind. Der erste Führungsabschnitt ist in einem Pumpenzylinder der Kolben-Kraftstoffpumpe angeordnet und der zweite Führungsabschnitt ist radial außen im Bereich des dem Antrieb zugewandten Endabschnitts des Pumpenkolbens angeordnet. Der Pumpenkolben ist folglich an zwei deutlich voneinander beabstandeten Lagerstellen geführt und/oder gelagert. Zum einen erfolgt eine Führung bzw. Lagerung durch den ersten Führungsabschnitt, zum anderen erfolgt eine Führung bzw. Lagerung durch den zweiten Führungsabschnitt. Die jeweiligen Führungs- bzw. Lagerpunkte liegen dabei in den jeweiligen Endabschnitten des Pumpenkolbens nahe an den Kraftangriffspunkten, an denen Querkräfte auftreten können, beispielsweise in der Umgebung des Antriebs (Nockenantrieb) des Pumpenkolbens. Somit können die Belastungen auf die Führungs- bzw. Lagerpunkte reduziert werden. Die Erfindung weist außerdem den Vorteil auf, dass eine Ölleckage bzw. Kraftstoffleckage der Kolben-Kraftstoffpumpe vermindert werden kann, indem der zweite Führungsabschnitt als zusätzliches Abstreifelement wirkt. Außerdem kann eine durch unerwünschte Querkräfte bewirkte axiale Schräge ("Schiefstand") des Pumpenkolbens vermindert werden. Dadurch kann auch die Dauerfestigkeit der Kolben-Kraftstoffpumpe verbessert werden.

Erfindungsgemäß ist der zweite Führungsabschnitt unmittelbar benachbart zu einer Kolbendichtung angeordnet. Dadurch kann eine auf die Kolbendichtung einwirkende Querkraft vermindert und somit einem Verschleiß der Kolbendichtung vorgebeugt sowie die Ölleckage bzw. Kraftstoffleckage zusätzlich vermindert werden.

Weiterhin kann vorgesehen sein, dass der zweite Führungsabschnitt auf der dem Antrieb zugewandten Seite der Kolbendichtung angeordnet ist. Dadurch wird ein besonders großer axialer Abstand zwischen dem ersten und dem zweiten Führungsabschnitt ermöglicht, wodurch insbesondere die beschriebenen Querkräfte noch stärker reduziert werden können.

Erfindungsgemäß umfasst die Kolben-Kraftstoffpumpe einen Dichtungsträger, der sowohl die Kolbendichtung als auch den zweiten Führungsabschnitt haltert. Dadurch wird eine besonders kompakte und robuste Anordnung dieser Elemente ermöglicht.

Die Dichtwirkung der Kolbendichtung kann verbessert werden, wenn sie an einem radial inneren Abschnitt mindestens zwei axial entgegengesetzt angeordnete Dichtlippen aufweist. Dadurch wird eine besonders gute Wirkung sowohl bei einer Aufwärtsbewegung als auch bei einer Abwärtsbewegung des Pumpenkolbens ermöglicht.

Weiterhin kann vorgesehen sein, dass die Kolbendichtung an einem radial äußeren Abschnitt mindestens einen radial umlaufenden wulstförmigen Dichtabschnitt umfasst. Dadurch kann eine Dichtwirkung zwischen der Kolbendichtung und einer Innenwand des Dichtungsträgers verbessert werden, wodurch die Ölleckage und/oder die Kraftstoffleckage nochmals vermindert werden kann. Der wulstförmige Dichtabschnitt kann auch lediglich dazu dienen, die Kolbendichtung am Dictungsträger axial unverrückbar zu haltern.

In einer weiteren Ausgestaltung der Kolben-Kraftstoffpumpe ist der zweite Führungsabschnitt ringförmig und weist einen im Wesentlichen L-förmigen radialen Querschnitt auf. Dadurch kann der zweite Führungsabschnitt besonders dicht und fest an dem Dichtungsträger angeordnet sein, insbesondere mittels Kraftschluss. Dadurch kann unter anderem die Dauerfestigkeit der Kolben-Kraftstoffpumpe erhöht werden.

In einer weiteren Ausgestaltung ist ein Verhältnis eines radialen Spiels zwischen dem zweiten Führungsabschnitt und dem Pumpenkolben und einer axialen Länge des zweiten Führungsabschnitts kleiner als 0,01. Dadurch kann die Funktion des zweiten Führungsabschnitts nochmals verbessert werden. Insbesondere wirkt der zweite Führungsabschnitt wegen des geringen radialen Spiels wie eine Spaltdichtung.

Kraftstoffpumpe mittels des zweiten Führungsabschnitts (wie oben beschrieben) und/oder durch die nachfolgend beschriebenen weiteren erfindungsgemäßen Ausgestaltungen des ersten Führungsabschnitts verbessert werden.

Insbesondere kann vorgesehen sein, dass der Pumpenkolben an dem ersten Führungsabschnitt eine Lagerungs- und Dichtanordnung für den Pumpenkolben aufweist, wobei die Lagerungs- und Dichtanordnung einen ersten Führungsbereich zur radialen Führung des Pumpenkolbens im Pumpenzylinder und einen eine Dichtlippe aufweisenden Abdichtbereich umfasst. Die erwähnte Lagerungs- und Dichtungsanordnung hat einen eigenständigen erfinderischen Charakter und könnte insoweit unabhängig von anderen Merkmalen bzw. in beliebiger Kombination mit anderen Merkmalen beansprucht werden. Die Lagerungs- und Dichtungsanordnung hat den Vorteil, dass eine Kolbenbuchse und die entsprechende hochgenaue Passung des Kolbens in der Kolbenbuchse nicht mehr zwingend erforderlich ist und somit erhebliche Kosten eingespart werden können. Statt dessen werden Lagerung und Abdichtung funktional getrennt in einen Lagerungsbereich und einen Abdichtbereich. Dessen Dichtlippe ermöglicht eine reibungsarme, spaltfreie und somit hochgenaue Abdichtung. Dadurch, dass die Dichtlippe elastisch ausgebildet ist und zumindest abschnittsweise unter Vorspannung an einer Pumpenzylinderwand anliegt, wird eine Vorspannung erzeugt. Durch die Vorspannung kann auch in einem Saughub der Kolben-Kraftstoffpumpe, d.h. wenn der Pumpenkolben sich zum unteren Totpunkt bewegt, eine Dichtfunktion im Abdichtbereich gewährleistet werden. Im Verdichtungshub, d.h. wenn der Pumpenkolben sich zum oberen Totpunkt bewegt, kann dann die Dichtlippe - wenn sie zum Förderraum hin gerichtet ist - vom im Förderraum herrschenden Kraftstoffdruck druckunterstützt dichtend an die Pumpenzylinderwand gedrückt werden.

Weiterhin kann vorgesehen sein, dass die Kolben-Kraftstoffpumpe ein Kunststoffelement umfasst, an dem die Lagerungs- und Dichtanordnung ausgebildet ist. Durch Ausführung des ersten und/oder zweiten Führungsabschnitts als Kunststoffelemente entfallen die hohen Toleranzanforderungen und es kann auf einen zusätzlichen Honprozess in der Montagelinie der Kolben-Kraftstoffpumpe verzichtet werden. Darüber hinaus kann das Kunststoffelement als einfaches Spritzgussteil hergestellt sein, wodurch es besonders kostengünstig herstellbar ist. Auch die Gefahr eine "Kolbenfressers" durch Materialverschmelzung kann durch die Wahl des Kunststoffelements vermieden werden.

Eine Ausgestaltung der Kolben-Kraftstoffpumpe sieht vor, dass die Lagerungs- und Dichtanordnung mit dem Pumpenkolben fest verbunden ist, vorzugsweise der Pumpenkolben einen kreisringartigen Absatz aufweist, mit dem die Lagerungs- und Dichtanordnung verklipst und/oder verklebt ist. Vorzugsweise ist die Lagerungs- und Dichtanordnung mittels eines Kunststoffelements ausgeführt. Durch die Verbindung des Kunststoffelements mit dem Pumpenkolben kann das Kunststoffelement der Auf- und Abbewegung des Pumpenkolbens folgen, wobei bei einer Klipsverbindung die Verbindung vorzugsweise lösbar und revisionierbar ausgebildet ist. Folglich kann das Kunststoffelement bei Verschleiß ersetzt werden.

Dabei kann der Absatz in der Umgebung eines einem Förderraum der Kolben-Kraftstoffpumpe zugewandten Endabschnitts des Pumpenkolbens angeordnet sein. Das Vorsehen des Absatzes in der Nähe des Endabschnitts ist von Vorteil, da der Führungsabschnitt somit nah an einem möglichen Lager- bzw. Kraftangriffspunkt angeordnet werden kann und auftretende Querkräfte am Endabschnitt des Pumpenkolbens vom Kunststoffelement aufgenommen werden können.

Ferner wird vorgeschlagen, dass die Lagerungs- und Dichtanordnung einteilig ausgebildet ist. Durch eine einteilige Herstellung des Kunststoffelements kann dieses in lediglich einem Fertigungsschritt beispielsweise durch einen Spritzgussprozess hergestellt werden.

Eine weitere Ausgestaltung der Kolben-Kraftstoffpumpe sieht vor, dass die Lagerungs- und Dichtanordnung mehrteilig ausgebildet ist. Dies ist vorteilhaft, da angepasst an die jeweiligen Anforderungen, d.h. für die Führung und/oder Lagerung und für die Dichtfunktion verschiedene Kunststoffe für den Führungsbereich und für den Abdichtbereich gewählt werden können.

Eine weitere Weiterbildung der erfindungsgemäßen Kolben-Kraftstoffpumpe zeichnet sich dadurch aus, dass die Teile der Lagerungs- und Dichtanordnung miteinander verklipst und/oder verklebt sind. Dies ist vorteilhaft, da unabhängig von der Materialwahl, d.h. vom Material des Führungsbereichs und des Abdichtbereichs die Teile miteinander verbunden werden können.

Denkbar ist ferner, dass zwischen Pumpenzylinder und Führungsbereich ein Spalt im Bereich von etwa 1/100 mm (Millimeter) bis etwa 10/100 mm, vorzugsweise von etwa 3/100 mm vorhanden ist. Dies ist von Vorteil, da durch den Spalt ein Verklemmen des Pumpenkolbens im Pumpenzylinder vermieden werden kann.

In einer weiteren Ausgestaltung der Kolben-Kraftstoffpumpe umfasst der erste Führungsabschnitt - also die Lagerungs- und Dichtanordnung - und/oder der zweite Führungsabschnitt ein Kunststoffmaterial, insbesondere ein Polyamid (PA) und/oder ein Polyetheretherketon (PEEK). Es hat sich gezeigt, dass bei der Herstellung des Kunststoffelements aus Polyamid (PA) oder Polyetheretherketon (PEEK) sehr gute Ergebnisse in Bezug auf die Führung bzw. Lagerung am Führungsbereich und in Bezug auf die Abdichtung am Abdichtbereich erzielbar sind.

Die Erfindung betrifft auch eine Kolben-Kraftstoffpumpe mit einem Pumpenkolben und einer Lagerungs- und Dichtanordnung für den Pumpenkolben, wobei die Lagerungs- und Dichtanordnung einen Führungsbereich zur radialen Führung des Pumpenkolbens im Pumpenzylinder und einen eine Dichtlippe aufweisenden Abdichtbereich umfasst.

Nachfolgend werden Beispiele der vorliegenden Erfindung unter Bezugnahme auf die beiliegenden Zeichnungen näher erläutert. In den Zeichnungen zeigen:
- Figur 1: eine schematische Darstellung eines Kraftstoffsystems einer Brennkraftmaschine mit einem Ausschnitt einer erfindungsgemäßen Kolben-Kraftstoffpumpe, bei der ein Pumpenkolben mittels eines ersten und eines zweiten Führungsabschnitts radial geführt ist.
- Figur 2: eine axiale Schnittansicht der Kolben-Kraftstoffpumpe in einem Bereich des zweiten Führungsabschnitts ähnlich zu einem unteren Bereich von Figur 1;

- Figur 3: eine erste schematische Darstellung des Pumpenkolbens und daran angreifenden Kräften gemäß dem Stand der Technik;
- Figur 4: eine zweite schematische Darstellung des Pumpenkolbens und daran angreifenden Kräften gemäß der Erfindung;
- Figur 5: eine dritte schematische Darstellung des Pumpenkolbens zusammen mit dem zweiten Führungsabschnitt;
- Figur 6: eine vergrößerte Schnittdarstellung des Ausschnitts der Kolben-Kraftstoffpumpe gemäß Figur 1 zur Erläuterung einer den ersten Führungsabschnitt bildenden Lagerungs- und Dichtanordnung; und
- Figur 7: einen vergrößerten Ausschnitt der Schnittdarstellung gemäß Figur 6.

Es werden für funktionsäquivalente Elemente und Größen in allen Figuren auch bei unterschiedlichen Ausführungsformen die gleichen Bezugszeichen verwendet.

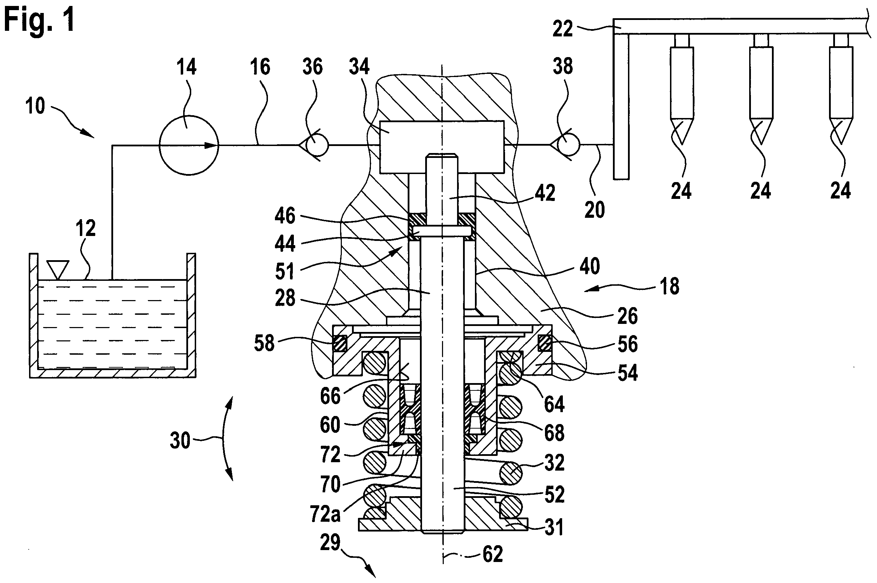

Ein Kraftstoffsystem einer Brennkraftmaschine trägt in Figur 1 insgesamt das Bezugszeichen 10. Es umfasst einen Kraftstoffbehälter 12, aus dem eine elektrische Vorförderpumpe 14 den Kraftstoff in eine Niederdruckleitung 16 fördert. Diese führt zu einer Hochdruckpumpe in Form einer Kolben-Kraftstoffpumpe 18. Von dieser führt eine Hochdruckleitung 20 zu einem Kraftstoffrail 22. An dieses sind mehrere Injektoren 24 angeschlossen, die den Kraftstoff direkt in ihnen jeweils zugeordnete Brennräume (nicht dargestellt) einspritzen.

Die Kolben-Kraftstoffpumpe 18 umfasst ein nur bereichsweise angedeutetes Pumpengehäuse 26, in dem ein Pumpenkolben 28 verschiebbar geführt bzw. gelagert ist. Dieser kann von einem nur durch sein Bezugszeichen repräsentierten Antrieb 29 (Rollenstößel, Nockenantrieb) in eine Hin- und Herbewegung versetzt werden, was durch einen seitlich gezeichneten Doppelpfeil 30 angedeutet ist. An einem in der Figur 1 unteren Endabschnitt 52 des Pumpenkolbens 28 ist ein Federteller 31 aufgepresst, welcher von einer Schraubenfeder 32 mit einer axialen Kraft beaufschlagt wird. Der Pumpenkolben 28 und das Pumpengehäuse 26 begrenzen einen Förderraum 34. Dieser Förderraum 34 ist über ein Einlassventil 36 mit der Niederdruckleitung 16 verbindbar. Ferner ist der Förderraum 34 über ein Auslassventil 38 mit der Hochdruckleitung 20 verbindbar.

Sowohl das Einlassventil 36 als auch das Auslassventil 38 sind als Rückschlagventile ausgeführt. Nicht dargestellt, aber möglich ist dabei eine Ausführung des Einlassventils 36 als Mengensteuerventil. Bei einem solchen kann das Einlassventil 36 während eines Förderhubs des Pumpenkolbens 28 zwangsweise geöffnet werden, so dass der Kraftstoff nicht in das Kraftstoffrail 22, sondern zurück in die Niederdruckleitung 16 gefördert wird. Hierdurch kann die von der Kolben-Kraftstoffpumpe 18 in das Kraftstoffrail 22 geförderte Kraftstoffmenge eingestellt werden.

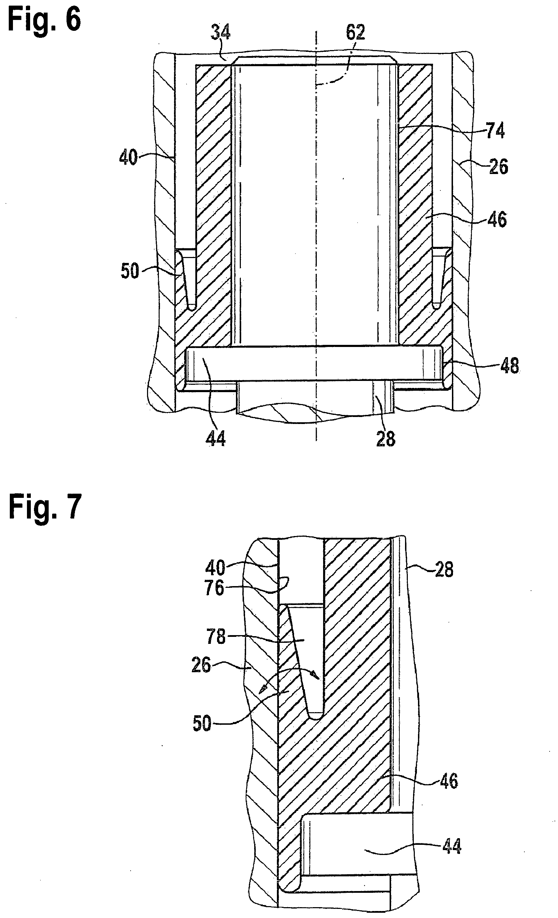

Der Pumpenkolben 28 ist in einem Pumpenzylinder 40 geführt, der insoweit Teil des Pumpengehäuses 26 ist. Der Pumpenkolben 28 weist an einem dem Förderraum 34 zugewandten Ende einen in Figur 1 oberen Endabschnitt 42 auf. In der Umgebung dieses oberen Endabschnitts 42 weist der Pumpenkolben 28 ferner einen kreisringartigen Absatz in der Art eines radial abstehenden umlaufenden Kragens 44 auf. Der Pumpenkolben 28 bzw. der Absatz 44 ist mit einer durch ein Kunststoffelement 46 gebildeten Lagerungs- und Dichtanordnung verklipst, wobei das Kunststoffelement 46 einen Führungsbereich 48 zur axialen Führung und/oder radialen Lagerung des Pumpenkolbens 28 im Pumpenzylinder 40 und einen als Dichtlippe ausgebildeten Abdichtbereich 50 aufweist. Der Absatz 44 und das Kunststoffelement 46 mit Führungsbereich 48 und Abdichtbereich 50 sind in den Figuren 6 und 7 besser zu erkennen. Insbesondere bilden der Absatz 44 und das Kunststoffelement 46 zusammen einen ersten Führungsabschnitt 51, mittels dessen der Pumpenkolben 28 in dem Pumpenzylinder 40 radial geführt ist.

An seinem dem Förderraum 34 abgewandten Ende weist der Pumpenkolben 28 ferner den bereits weiter oben genannten unteren Endabschnitt 52 auf. In der Umgebung dieses unteren Endabschnitts 52 ist ein Dichtungsträger 54 am Pumpengehäuse 26 fest angeordnet. Zwischen dem Dichtungsträger 54 und dem Pumpengehäuse 26 ist eine O-Ring-Dichtung 56 in einer Nut 58 vorgesehen. Der Dichtungsträger 54 weist einen Zylinderabschnitt 60 auf, der sich koaxial zum Pumpenkolben 28 erstreckt und mittels welchen die Schraubenfeder 32 geführt ist. Die Schraubenfeder 32 taucht entlang einer Kolbenlängsachse 62 zumindest abschnittsweise in eine Federaufnahmenut 64 des Dichtungsträgers 54 ein, wo sie sich gegen den Dichtungsträger 54 axial abstützt. Insgesamt ist der Dichtungsträger 54 in der gezeigten Schnittdarstellung umgekehrt hutförmig.

Der Dichtungsträger 54 weist ferner im Inneren einen kreiszylindrischen Aufnahmeabschnitt 66 auf, der im Wesentlichen durch die innere Umfangswand des Zylinderabschnitts 60 gebildet wird. In diesem Aufnahmeabschnitt 66 ist eine ringförmige Kolbendichtung 68 relativ zum Pumpengehäuse 26 ortsfest angeordnet, wobei die Kolbendichtung 68 einen in etwa H-förmigen Querschnitt hat. In einem sich am abragenden Ende des Zylinderabschnitts 60 nach radial einwärts erstreckenden Kragenabschnitt 70 ist ferner ein zweiter Führungsabschnitt 72 ebenfalls relativ zum Pumpengehäuse 26 ortsfest angeordnet. Insbesondere sind die Kolbendichtung 68 sowie der zweite Führungsabschnitt 72 mit dem Dichtungsträger 54 kraftschlüssig verbunden. Ein Bereich in der Figur 1 oberhalb der Kolbendichtung 68 wird als auch "Kraftstoffseite" und ein Bereich unterhalb des zweiten Führungsabschnitts 72 wird auch als "Ölseite" bezeichnet.

Vorliegend ist der zweite Führungsabschnitt 72 als (zweites) Kunststoffelement 72a ausgeführt. Dieser somit in axialer Richtung des Pumpenkolbens 28 gesehen vom ersten Führungsabschnitt 51 (bzw. ersten Kunststoffelement 46) deutlich beabstandete zweite Führungsabschnitt 72 (bzw. zweite Kunststoffelement 72a) stellt zusammen mit dem ersten Führungsabschnitt 51 (bzw. dem Führungsbereich 48 des Kunststoffelements 46) die radiale Führung bzw. Zweipunktlagerung des Pumpenkolbens 28 bereit. Dabei haltert der Dichtungsträger 54 sowohl die Kolbendichtung 68 als auch den zweiten Führungsabschnitt 72. Es sei an dieser Stelle darauf hingewiesen, dass der erste Führungsabschnitt 51 und der zweite Führungsabschnitt 72 auch unabhängig voneinander realisierbar sind.

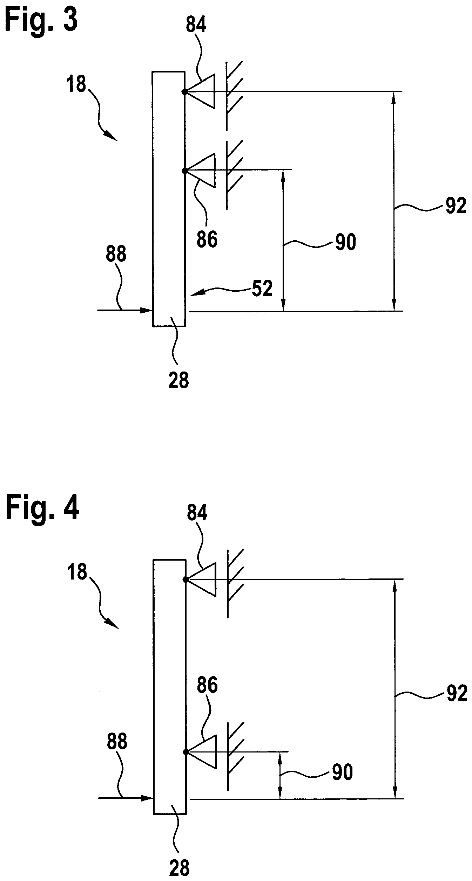

Der Lagerpunkt des zweiten Führungsabschnitts 72 befindet sich in der Nähe der Krafteinleitung durch die Schraubenfeder 32 bzw. durch den nicht dargestellten Nockenantrieb am in Figur 1 unteren Endabschnitt 52 des Pumpenkolbens 28. Somit kann eine Drehmomentbelastung der Lagerstellen reduziert werden. Durch die Trennung der Lagerung in den ersten und zweiten Führungsabschnitt 51 und 72 kann die Lagerung jeweils in der Nähe des oberen Endabschnitts 42 und des unteren Endabschnitts 52 des Pumpenkolbens 28 vorgesehen werden, womit der Einfluss von Querkräften verringert werden kann. Vergleiche auch weiter unten die Figuren 3 und 4. Durch eine daraus folgende geringere Lagerbelastung kann so die Verwendung der Kunststoffelemente 46 und 72a ermöglicht werden.

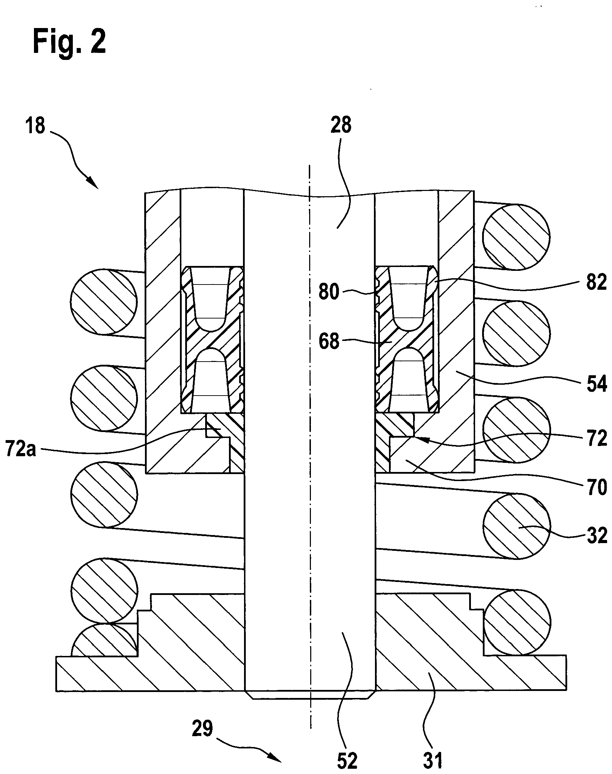

Figur 2 zeigt eine axiale Schnittansicht der Kolben-Kraftstoffpumpe 18 in einem Bereich des Dichtungsträgers 54 und des zweiten Führungsabschnitts 72 ähnlich zu einem unteren Bereich von Figur 1. Vorliegend ist der Dichtungsträger 54 als Stahl-Tiefziehteil ausgeführt, er könnte aber auch ein Kunststoffteil sein. Man erkennt, dass der zweite Führungsabschnitt 72 unmittelbar benachbart zu der Kolbendichtung 68 angeordnet ist. Insbesondere ist der zweite Führungsabschnitt 72 auf der dem Antrieb 29 zugewandten Seite der Kolbendichtung 68 angeordnet.

Weiterhin ist aus der Figur 2 zu erkennen, dass die Kolbendichtung 68 an einem radial inneren Abschnitt insgesamt sechs umlaufende und nach radial einwärts gerichtete Dichtlippen 80 aufweist, wobei diese jeweils zu dreien und dreien einander axial entgegengesetzt angeordnet sind. An einem radial äußeren Abschnitt der Kolbendichtung 68 sind insgesamt zwei radial umlaufende wulstförmige Dichtabschnitte 82 angeordnet. Somit dichten die Dichtlippen 80 ("dynamisch") gegen eine radial äußere Fläche des axial bewegbaren Pumpenkolbens 28 und die Dichtabschnitte 82 dichten ("statisch") gegen den Aufnahmeabschnitt 66 (siehe Figur 1) des Dichtungsträgers 54.

Weiterhin ist in der Figur 2 zu erkennen, dass der zweite Führungsabschnitt 72 bzw. das zweite ringförmige Kunststoffelement 72a einen im Wesentlichen L-förmigen radialen Querschnitt aufweist.

Figur 3 zeigt eine erste schematische Darstellung des Pumpenkolbens 28 und daran angreifenden Kräften, wie sie bei vorbekannten Ausführungsformen der Kolben-Kraftstoffpumpe 18 gemäß dem Stand der Technik möglich sind. In einem in der Figur 3 mittleren und oberen Abschnitt des Pumpenkolbens 28 sind im rechten Teil der Zeichnung zwei radial wirkende Auflager 84 und 86 schematisch dargestellt. In einem in der Figur 3 linken unteren Bereich greift eine radial wirkende Querkraft 88 in einem Bereich des unteren Endabschnitts 52 des Pumpenkolbens 28 an. Beispielsweise ist die (in der Figur 3 durch einen Pfeil bezeichnete) Querkraft 88 eine Summe von Querkräften, welche durch die Schraubenfeder 32 und/oder durch den Antrieb 29 auf den Federteller 31 übertragen werden.

Doppelpfeile 90 und 92 kennzeichnen einen jeweiligen axialen Abstand zwischen den Auflagern 84 und 86 und einem axialen Maß der durch die Querkraft 88 bestimmten Krafteinleitung. Man erkennt, dass bedingt durch den vergleichsweise geringen axialen Abstand zwischen den Auflagern 84 und 86 das durch die Querkraft 88 auf den Pumpenkolben 28 wirkende Moment zu vergleichsweise großen radialen Kräften an dem Pumpenkolben 28 im Bereich der Auflager 84 und 86 führt.

Figur 4 zeigt eine zweite schematische Darstellung des Pumpenkolbens 28 und daran angreifenden Kräften, wie sie bei der erfindungsgemäßen Kolben-Kraftstoffpumpe 18 auftreten können. Im Unterschied zu der vorbekannten Ausführungsform gemäß Figur 3 ist der axiale Abstand zwischen den Auflagern 84 und 86 (welche jeweils dem ersten und den zweiten Führungsabschnitt 51 und 72 entsprechen) vergleichsweise groß. Entsprechend führt das in Folge der Querkraft 88 auf den Pumpenkolben 28 wirkende Moment nur zu vergleichsweise kleinen radialen Kräften an dem Pumpenkolben 28 im Bereich der Kolbendichtung 68 sowie im Bereich der Auflager 84 und 86 bzw. des ersten und des zweiten Führungsabschnitts 51 und 72. Dadurch kann die Dauerfestigkeit der erfindungsgemäßen Kolben-Kraftstoffpumpe 18 verbessert werden und/oder die Führungsabschnitte 51 bzw. 72 können aus einem Kunststoffmaterial, beispielsweise aus Polyamid (PA) oder aus einem Polyetheretherketon (PEEK) hergestellt sein.

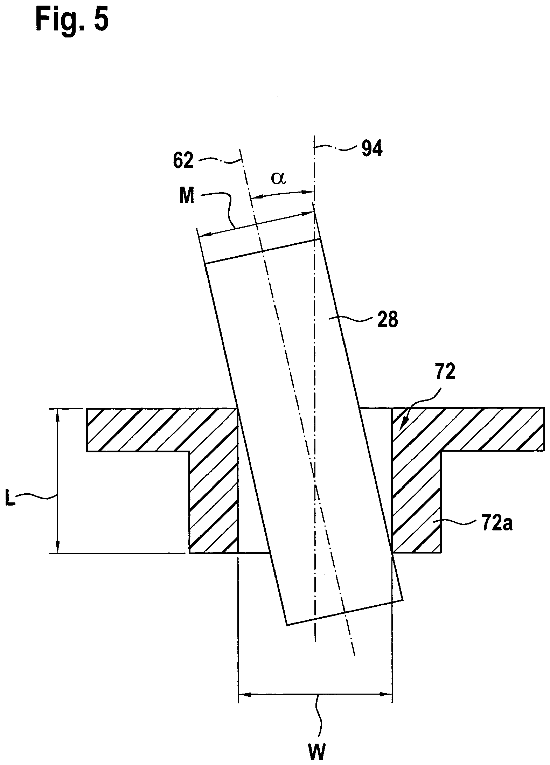

Figur 5 zeigt eine weitere schematische Darstellung des Pumpenkolbens 28 zusammen mit dem zweiten Führungsabschnitt 72. Der Pumpenkolben 28 weist einen Außendurchmesser M auf und der zweite Führungsabschnitt 72 bzw. das Kunststoffelement 72a weist einen Innendurchmesser W auf. Ein axiales Maß des zweiten Führungsabschnitts 72 weist eine Länge L auf. Der Pumpenkolben 28 ist in dem zweiten Führungsabschnitt 72 maximal verkanntet gezeichnet, wobei sich zwischen der Kolbenlängsachse 62 und einer Längsachse 94 der Kolben-Kraftstoffpumpe 18 ein Winkel α ergibt.

Damit kann ein Spiel S des Pumpenkolbens 28 in dem zweiten Führungsabschnitt 72 ermittelt werden zu: S = W - M. Entsprechend kann es von Vorteil sein, dass ein Verhältnis des radialen Spiels S zwischen dem zweiten Führungsabschnitt 72 und dem Pumpenkolben 28 einerseits und der axialen Länge L andererseits möglichst gering ist und beispielsweise kleiner als 0,01 beträgt. Zwecks Vereinfachung wurde bei der Darstellung von Figur 5 die Wirkung des ersten Führungsabschnitts 51 (siehe Figur 1) nicht berücksichtigt.

Die Ausgestaltung des Kunststoffelements 46 für den ersten Führungsabschnitt 51 ist vorliegend von besonderer Bedeutung. Auf dieses wird daher nunmehr unter Bezugnahme auf die Figuren 6 und 7 stärker im Detail eingegangen:
Figur 6 zeigt eine Schnittdarstellung eines Ausschnitts der Kolben-Kraftstoffpumpe 18 von Figur 1, wobei das Kunststoffelement 46 deutlich zu erkennen ist. In einem in Figur 6 oberen Bereich weist das Kunststoffelement 46 einen Einschubabschnitt 74 in Form eines geraden Rohrabschnitts auf, der koaxial zum Pumpenkolben 28 ist und vom Pumpenkolben 28 durchdrungen wird bzw. auf diesen aufgeschoben ist. In einem in Figur 6 unteren Bereich ist das Kunststoffelement 46 über den Absatz 44 mit dem Pumpenkolben 28 verklipst. Insbesondere der radial außerhalb von der äußeren Mantelfläche des Absatzes 44 vorhandene Materialbereich des Kunststoffelements 46 bildet den bereits oben erwähnten Lager. bzw. Führungsbereich 48, durch den der Pumpenkolben 28 gleitend im Pumpenzylinder 40 geführt und radial gelagert ist.

Der Führungsbereich 48 weist von einer inneren Umfangswand 76 des Pumpenzylinders 40 einen in den Figuren nicht erkennbaren Abstand von etwa 3/100 mm (Millimeter) auf. In axialer Richtung, das heißt entlang der Kolbenlängsachse 62, erstreckt sich zum Förderraum 34 hin im Anschluss an den Führungsbereich 48 der als Dichtlippe ausgebildete Abdichtbereich 50. Die Dichtlippe 50 erstreckt sich dabei als an den Führungsbereich 48 angeformter und nach radial außen elastisch vorgespannter Rohrabschnitt im Wesentlichen koaxial zum Pumpenkolben 28. Der Führungsbereich 48 und der Abdichtbereich 50 sind in Figur 6 und 7 einteilig ausgebildet.

Die Dichtlippe 50 liegt, wie in Figur 7 nochmals vergrößert zu erkennen ist, unter Vorspannung an der inneren Umfangswand 76 des Pumpenzylinders 40 an. Zwischen der Dichtlippe und dem Abdichtbereich 50 ist im Kunststoffelement 46 eine Ausnehmung vorhanden, welche einen Druckunterstützungsbereich 78 bildet. Dieser Druckunterstützungsbereich 78 ist derart ausgebildet, dass bei einer Bewegung des Pumpenkolbens 28 zum oberen Totpunkt, d.h. im Förderhub der Kolben-Kraftstoffpumpe 18, der im Förderraum 34 herrschende Druck im Druckunterstützungsbereich 78 und so auch an der freien Außenseite der Dichtlippe wirkt, wodurch die Dichtlippe 50 zusätzlich zur Vorspannung hin zur Wand 76 dichtend beaufschlagt wird.

## Patentansprüche

1. Kolben-Kraftstoffpumpe (18) mit einem Pumpenkolben (28), welcher einen einem Antrieb (29) zugewandten Endabschnitt (52) aufweist, wobei der Pumpenkolben (28) mittels mindestens eines ersten und mindestens eines zweiten Führungsabschnitts (51, 72) radial geführt ist, wobei der erste und der zweite Führungsabschnitt (51, 72) axial voneinander beabstandet sind, wobei der erste Führungsabschnitt (51) in einem Pumpenzylinder (40) der Kolben-Kraftstoffpumpe (18) angeordnet ist und der zweite Führungsabschnitt (72) im Bereich des dem Antrieb (29) zugewandten Endabschnitts (52) angeordnet ist, **dadurch gekennzeichnet, dass** der zweite Führungsabschnitt (72) unmittelbar benachbart zu einer Kolbendichtung (68) angeordnet ist und dass die Kolben-Kraftstoffpumpe einen Dichtungsträger (54) umfasst, der sowohl die Kolbendichtung (68) als auch den zweiten Führungsabschnitt (72) haltert, wobei der Dichtungsträger (54) in einer Umgebung des unteren Endabschnitts (52) fest an einem Pumpengehäuse (26) der Kolben-Kraftstoffpumpe (18) angeordnet ist.

2. Kolben-Kraftstoffpumpe (18) nach Anspruch 1, **dadurch gekennzeichnet, dass** der zweite Führungsabschnitt (72) auf der dem Antrieb (29) zugewandten Seite der Kolbendichtung (68) angeordnet ist.

3. Kolben-Kraftstoffpumpe (18) nach Anspruch 1 oder 2, **dadurch gekennzeichnet, dass** die Kolbendichtung (68) an einem radial inneren Abschnitt mindestens zwei axial entgegengesetzt angeordnete Dichtlippen (80) aufweist.

4. Kolben-Kraftstoffpumpe (18) nach einem der Ansprüche 1 bis 3, **dadurch gekennzeichnet, dass** die Kolbendichtung (68) an einem radial äußeren Abschnitt mindestens einen radial umlaufenden wulstförmigen Dichtabschnitt (82) umfasst.

5. Kolben-Kraftstoffpumpe (18) nach wenigstens einem der vorhergehenden Ansprüche, **dadurch gekennzeichnet, dass** der zweite Führungsabschnitt (72) ringförmig ist und einen im Wesentlichen L-förmigen radialen Querschnitt aufweist.

6. Kolben-Kraftstoffpumpe (18) nach wenigstens einem der vorhergehenden Ansprüche, **dadurch gekennzeichnet, dass** ein Verhältnis eines radialen Spiels (S) zwischen dem zweiten Führungsabschnitt (72) und dem Pumpenkolben (28) und einer axialen Länge (L) des zweiten Führungsabschnitts (72) kleiner als 0,01 beträgt.

7. Kolben-Kraftstoffpumpe (18) nach wenigstens einem der vorhergehenden Ansprüche, **dadurch gekennzeichnet, dass** der Pumpenkolben (28) an dem ersten Führungsabschnitt (51) eine Lagerungs- und Dichtanordnung (46) für den Pumpenkolben (28) aufweist, wobei die Lagerungs- und Dichtanordnung (46) einen Führungsbereich (48) zur radialen Führung des Pumpenkolbens (28) im Pumpenzylinder (40) und einen eine Dichtlippe aufweisenden Abdichtbereich (50) umfasst.

8. Kolben-Kraftstoffpumpe (18) nach Anspruch 7, **dadurch gekennzeichnet, dass** sie ein Kunststoffelement (46) umfasst, an dem die Lagerungs- und Dichtanordnung (46) ausgebildet ist.

9. Kolben-Kraftstoffpumpe (18) nach Anspruch 7 oder 8, **dadurch gekennzeichnet, dass** die Lagerungs- und Dichtanordnung (46) mit dem Pumpenkolben (28) fest verbunden ist, vorzugsweise der Pumpenkolben (28) einen kreisringartigen Absatz (44) aufweist, mit dem die Lagerungs- und Dichtanordnung (46) verklipst und/oder verklebt ist.

10. Kolben-Kraftstoffpumpe (18) nach Anspruch 9, **dadurch gekennzeichnet, dass** der Absatz (44) in der Umgebung eines einem Förderraum (34) der Kolben-Kraftstoffpumpe (18) zugewandten Endabschnitts (42) des Pumpenkolbens (28) angeordnet ist.

11. Kolben-Kraftstoffpumpe (18) nach wenigstens einem der Ansprüche 7 bis 10, **dadurch gekennzeichnet, dass** die Lagerungs- und Dichtanordnung (46) einteilig ausgebildet ist.

12. Kolben-Kraftstoffpumpe (18) nach wenigstens einem der Ansprüche 7 bis 10, **dadurch gekennzeichnet, dass** die Lagerungs- und Dichtanordnung (46) mehrteilig ausgebildet ist.

13. Kolben-Kraftstoffpumpe (18) nach Anspruch 12, **dadurch gekennzeichnet, dass** die Teile der Lagerungs- und Dichtanordnung (46) miteinander verklipst und/oder verklebt sind.

14. Kolben-Kraftstoffpumpe (18) nach wenigstens einem der Ansprüche 7 bis 13, **dadurch gekennzeichnet, dass** zwischen Pumpenzylinder (40) und Führungsbereich (48) ein Spalt im Bereich von etwa 1/100 mm, Millimeter, bis etwa 10/100 mm, vorzugsweise von etwa 3/100 mm vorhanden ist.

15. Kolben-Kraftstoffpumpe (18) nach wenigstens einem der vorhergehenden Ansprüche, **dadurch gekennzeichnet, dass** der zweite Führungsabschnitt (72) und/oder das Kunststoffelement (46) bzw. die Lagerungs- und Dichtanordnung ein Kunststoffmaterial, insbesondere ein Polyamid (PA) und/oder ein Polyetheretherketon (PEEK), umfasst.

## Claims

1. Piston-type fuel pump (18) having a pump piston (28) which has an end section (52) facing toward a drive (29), wherein the pump piston (28) is guided radially by means of at least one first and at least one second guide section (51, 72), wherein the first and the second guide sections (51, 72) are axially spaced apart from one another, wherein the first guide section (51) is arranged in a pump cylinder (40) of the piston-type fuel pump (18), and the second guide section (72) is arranged in the region of the end section (52) facing toward the drive (29), **characterized in that** the second guide section (72) is arranged directly adjacent to a piston seal (68), and **in that** the piston-type fuel pump comprises a seal carrier (54) which holds both the piston seal (68) and the second guide section (72), wherein the seal carrier (54) is, in a region of the lower end section (52), arranged fixedly on a pump housing (26) of the piston-type fuel pump (18).

2. Piston-type fuel pump (18) according to Claim 1, **characterized in that** the second guide section (72) is arranged on that side of the piston seal (68) which faces toward the drive (29).

3. Piston-type fuel pump (18) according to Claim 1 or 2, **characterized in that** the piston seal (68) has, on a radially inner section, at least two axially oppositely arranged sealing lips (80).

4. Piston-type fuel pump (18) according to one of Claims 1 to 3, **characterized in that** the piston seal (68) comprises, on a radially outer section, at least one radially encircling, bead-like sealing section (82).

5. Piston-type fuel pump (18) according to at least one of the preceding claims, **characterized in that** the second guide section (72) is of ring-shaped form and has a substantially L-shaped radial cross section.

6. Piston-type fuel pump (18) according to at least one of the preceding claims, **characterized in that** a ratio of a radial clearance (S) between the second guide section (72) and the pump piston (28) and an axial length (L) of the second guide section (72) amounts to less than 0.01.

7. Piston-type fuel pump (18) according to at least one of the preceding claims, **characterized in that** the pump piston (28) has, on the first guide section (51), a mounting and sealing arrangement (46) for the pump piston (28), wherein the mounting and sealing arrangement (46) comprises a guide region (48) for the radial guidance of the pump piston (28) in the pump cylinder (40) and has a sealing region (50) with a sealing lip.

8. Piston-type fuel pump (18) according to Claim 7, **characterized in that** said piston-type fuel pump comprises a plastics element (46) on which the mounting and sealing arrangement (46) is formed.

9. Piston-type fuel pump (18) according to Claim 7 or 8, **characterized in that** the mounting and sealing arrangement (46) is fixedly connected to the pump piston (28), and preferably, the pump piston (28) has a circular-ring-shaped step (44) to which the mounting and sealing arrangement (46) is clipped and/or adhesively bonded.

10. Piston-type fuel pump (18) according to Claim 9, **characterized in that** the step (44) is arranged in the vicinity of an end section (42), which faces toward a delivery chamber (34) of the piston-type fuel pump (18), of the pump piston (28).

11. Piston-type fuel pump (18) according to at least one of Claims 7 to 10, **characterized in that** the mounting and sealing arrangement (46) is of unipartite form.

12. Piston-type fuel pump (18) according to at least one of Claims 7 to 10, **characterized in that** the mounting and sealing arrangement (46) is of multipart form.

13. Piston-type fuel pump (18) according to Claim 12, **characterized in that** the parts of the mounting and sealing arrangement (46) are clipped and/or adhesively bonded to one another.

14. Piston-type fuel pump (18) according to at least one of Claims 7 to 13, **characterized in that** a gap in the range from approximately 1/100 mm, millimetres, to approximately 10/100 mm, preferably of approximately 3/100 mm, is provided between pump cylinder (40) and guide region (48).

15. Piston-type fuel pump (18) according to at least one of the preceding claims, **characterized in that** the second guide section (72) and/or the plastics element (46) and/or the mounting and sealing arrangement comprises a plastics material, in particular a polyamide (PA) and/or a polyetheretherketone (PEEK).

## Revendications

1. Pompe à carburant à piston (18) comprenant un piston de pompe (28) qui présente une portion d'extrémité (52) tournée vers un entraînement (29), le piston de pompe (28) étant guidé radialement au moyen d'au moins une première et d'au moins une deuxième portion de guidage (51, 72), la première et la deuxième portion de guidage (51, 72) étant espacées axialement l'une de l'autre, la première portion de guidage (51) étant disposée dans un cylindre de pompe (40) de la pompe à carburant à piston (18) et la deuxième portion de guidage (72) étant disposée dans la région de la portion d'extrémité (52) tournée vers l'entraînement (29), **caractérisée en ce que** la deuxième portion de guidage (72) est disposée directement à côté d'un joint d'étanchéité de piston (68) et **en ce que** la pompe à carburant à piston comprend un support de joint d'étanchéité (54) qui retient à la fois le joint d'étanchéité de piston (68) et la deuxième portion de guidage (72), le support de joint d'étanchéité (54) étant disposé fixement aux environs de la portion d'extrémité inférieure (52) sur un boîtier de pompe (26) de la pompe à carburant à piston (18).

2. Pompe à carburant à piston (18) selon la revendication 1, **caractérisée en ce que** la deuxième portion de guidage (72) est disposée du côté du joint d'étanchéité de piston (68) tourné vers l'entraînement (29).

3. Pompe à carburant à piston (18) selon la revendication 1 ou 2, **caractérisée en ce que** le joint d'étanchéité de piston (68) présente, au niveau d'une portion radialement interne, au moins deux lèvres d'étanchéité (80) disposées de manière opposée axialement.

4. Pompe à carburant à piston (18) selon l'une quelconque des revendications 1 à 3, **caractérisée en ce que** le joint d'étanchéité de piston (68) comprend, au niveau d'une portion radialement extérieure, au moins une portion d'étanchéité en forme de bourrelet radialement périphérique (82).

5. Pompe à carburant à piston (18) selon au moins l'une quelconque des revendications précédentes, **caractérisée en ce que** la deuxième portion de guidage (72) est de forme annulaire et présente une section transversale radiale essentiellement en forme de L.

6. Pompe à carburant à piston (18) selon au moins l'une quelconque des revendications précédentes, **caractérisée en ce qu'**un rapport d'un jeu radial (S) entre la deuxième portion de guidage (72) et le piston de pompe (28) et d'une longueur axiale (L) de la deuxième portion de guidage (72) est inférieur à 0,01.

7. Pompe à carburant à piston (18) selon au moins l'une quelconque des revendications précédentes, **caractérisée en ce que** le piston de pompe (28) présente, au niveau de la première portion de guidage (51), un agencement de palier et d'étanchéité (46) pour le piston de pompe (28), l'agencement de palier et d'étanchéité (46) comprenant une région de guidage (48) pour le guidage radial du piston de pompe (28) dans le cylindre de pompe (40) et une région d'étanchéité (50) présentant une lèvre d'étanchéité.

8. Pompe à carburant à piston (18) selon la revendication 7, **caractérisée en ce qu'**elle comprend un élément en plastique (46) sur lequel est réalisé l'agencement de palier et d'étanchéité (46).

9. Pompe à carburant à piston (18) selon la revendication 7 ou 8, **caractérisée en ce que** l'agencement de palier et d'étanchéité (46) est connecté fixement au piston de pompe (28), de préférence le piston de pompe (28) présente un épaulement de type annulaire circulaire (44) avec lequel l'agencement de palier et d'étanchéité (46) est encliqueté et/ou collé.

10. Pompe à carburant à piston (18) selon la revendication 9, **caractérisée en ce que** l'épaulement (44) est disposé aux environs d'une portion d'extrémité (42) du piston de pompe (28) tournée vers un espace de refoulement (34) de la pompe à carburant à piston (18).

11. Pompe à carburant à piston (18) selon au moins l'une quelconque des revendications 7 à 10, **caractérisée en ce que** l'agencement de palier et d'étanchéité (46) est réalisé d'une seule pièce.

12. Pompe à carburant à piston (18) selon au moins l'une quelconque des revendications 7 à 10, **caractérisée en ce que** l'agencement de palier et d'étanchéité (46) est réalisé en plusieurs parties.

13. Pompe à carburant à piston (18) selon la revendication 12, **caractérisée en ce que** les pièces de l'agencement de palier et d'étanchéité (46) sont encliquetées et/ou collées les unes aux autres.

14. Pompe à carburant à piston (18) selon au moins l'une quelconque des revendications 7 à 13, **caractérisée en ce qu'**entre le cylindre de pompe (40) et la région de guidage (48) est prévu un espace de l'ordre d'environ 1/100 mm à environ 10/100 mm, de préférence d'environ 3/100 mm.

15. Pompe à carburant à piston (18) selon au moins l'une quelconque des revendications précédentes, **caractérisée en ce que** la deuxième portion de guidage (72) et/ou l'élément en plastique (46) ou l'agencement de palier et d'étanchéité comprend un matériau en plastique, en particulier un polyamide (PA) et/ou une polyétheréthercétone (PEEK).
